# EUROPEAN PATENT SPECIFICATION

(11) **EP 2 702 801 B1**
(45) Date of publication and mention of the grant of the patent: **10.02.2016**
(21) Application number: 11864418.6
(22) Date of filing: 28.04.2011
(51) Int. Cl.: H04L 1/18, H04L 5/00, H04L 5/14, H04W 28/04, H04W 28/26, H04W 72/12

(54) **PHICH RESERVED RESOURCES IN CASE OF DIFFERENT TDD UL/DL CONFIGURATIONS**
RESERVIERTE PHICH-RESSOURCEN IM FALLE VON UNTERSCHIEDLICHEN TDD-UL/DL-KONFIGURATIONEN
RESSOURCES RÉSERVÉES POUR LE CANAL PHICH DANS LE CAS DE DIFFÉRENTES CONFIGURATIONS DE UL/DL EN TDD

(43) Date of publication of application: 05.03.2014
(73) Proprietor: Broadcom Corporation, Irvine, CA 92617 (US)
(72) Inventor: ZENG, Erlin, Beijing 100096 (CN); HAN, Jing, Beijing 100101 (CN); BAI, Wei, Beijing 100028 (CN); WANG, Haiming, Beijing 100015 (CN)
(74) Representative: EIP
(86) International application number: PCT/CN2011/073440
(87) International publication number: WO 2012/145907

(56) References cited:
- CN-A- 101 827 393
- CN-A- 101 938 793
- QUALCOMM INCORPORATED: "PHICH for CA Operation (R1-103531)", 3GPP DRAFT, vol. RAN WG1, no. #61bis, 22 June 2010 (2010-06-22), XP050449041, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE [retrieved on 2010-06-22]
- QUALCOMM INCORPORATED: "On ACK/NAK codebook size determination with respect to special subframes in TDD (R1-110913)", 3GPP DRAFT, vol. RAN WG1, no. #64, 15 February 2011 (2011-02-15), XP050599144, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE [retrieved on 2011-02-15]

## Description

### TECHNICAL FIELD:

The present invention relates generally to wireless communication systems, methods, devices and computer programs, and more specifically to receiving and transmitting a physical hybrid automatic repeat request HARQ indicator channel.

### BACKGROUND:

The following abbreviations that may be found in the specification and/or the drawing figures are defined as follows:
- 3GPP: third generation partnership project
- CA: carrier aggregation
- CC: component carrier
- CCE: control channel element
- CDM: code division multiplexing
- DL: downlink
- eNodeB: node B/base station in an E-UTRAN system
- DL: downlink
- E-UTRAN: evolved UTRAN (LTE)
- LTE: long term evolution
- LTE-A: long term evolution-advanced
- PCC/PCell: primary component carrier/primary cell
- PDCCH: physical downlink control channel
- PDSCH: shared channel
- PHICH: physical HARQ indication channel
- RE: resource element
- RRC: radio resource control
- SCC/SCell: secondary component carrier/secondary cell
- TDD: time division duplex
- UE: user equipment
- UL: uplink
- UTRAN: universal terrestrial radio access network

The concept of carrier aggregation CA is now well known in the wireless communication arts and has been undergoing development for the LTE/LTE-A systems. In CA the whole system bandwidth is carved into multiple component carriers CCs. Specific for LTE/LTE-A, each UE is to be assigned one PCell (alternatively termed a PCC) which remains active and one or more SCells (alternatively termed SCells) which may or may not be active at any given time, depending on data volume for the UE and traffic conditions in the serving cell. At least one CC is to be backward compatible with UE's which are not capable of CA operation, and the SCells may be similar to the PCell (e.g., with their own set of control channels) or what is termed extension CCs which can be utilized only in conjunction with a full CC (e.g., only traffic channels on the extension CCs). For example, the network can send a resource allocation (a PDCCH) to a UE on its PCell which allocates resources for sending/receiving data on any activated SCell, even an extension carrier. This is known as cross-scheduling (the resource allocation or schedule is communicated on a different CC than the scheduled radio resource is located), and is not limited to only the PCell and extension CCs. The LTE-A system seeks to expand this concept so that it is possible to have one or more SCells in unlicensed spectrum (e.g., the ISM band or TV whitespaces).

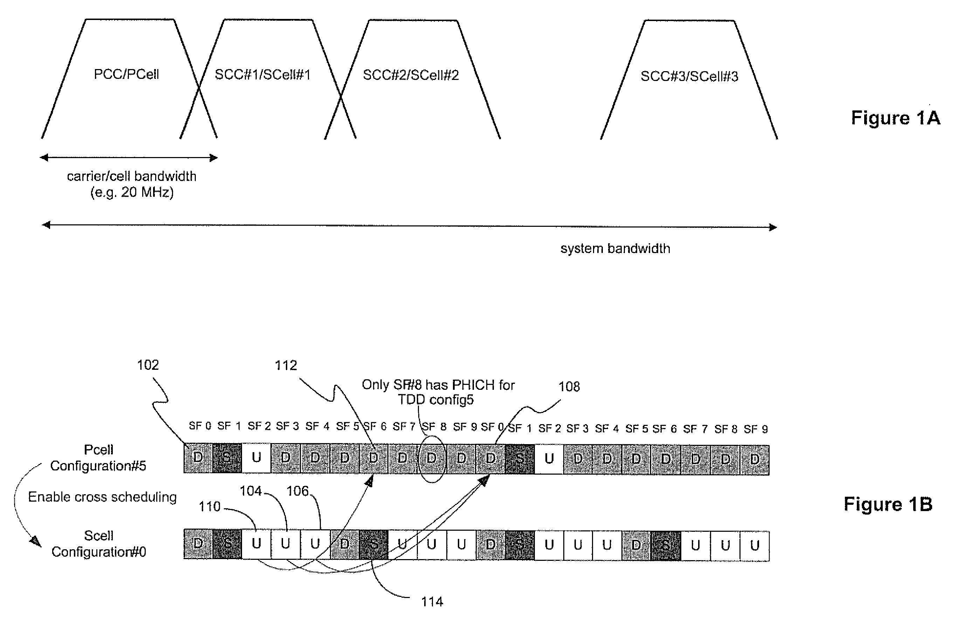

Figure 1A illustrates the general CA concept for LTE/LTE-A. For a given UE there is assigned a PCell 100 which by example is backward-compatible with LTE Release 8/9 UEs (and therefore 20 MHz in bandwidth). That same UE may also have in its assigned set SCell#1, Scell#2 and SCell#3, which for completeness SCell#3 is shown as being non-contiguous in frequency with the other CCs. Any number of the SCells or none of them may be active for that UE at any given time, as coordinated with the eNodeB. Every UE is to have its assigned PCell always active, and so the legacy UEs will be assigned one backward-compatible CC (e.g., its PCell) and no others.

Each CC will be operating at any given moment with a specific UL/DL configuration, each configuration defining a specific order of DL and UL subframes. The eNodeB may send and the UE may receive DL control information (PDCCH, PHICH) or data (PDSCH) in a DL subframe. Correspondingly the UE may send and the eNodeB may receive UL control information (HARQ) or data (PUSCH) in a UL subframe. The UE gets is schedule of allocated DL and UL resources in a PDCCH which tells which DL and/or UL subframes are allocated for the UE's data. Each specific UL/DL configuration has a channel mapping associated with it, and relevant to these teachings there is a mapping of the UE's UL subframe in which the UE sends data in a PUSCH to a DL subframe in which the UE listens for a PHICH to confirm whether or not the eNodeB properly received and decoded its UL data. Such mapping for LTE frame structure type 2 is currently set forth in 3GPP TS 36.211 v9.0.0 (2009-12) at section 6.9, table 6.9-1

It is expected for 3GPP Release 11 (LTE-A) that there will be the capability for cross scheduling across CCs, and also that the different CCs may have different UL/DL configurations. The latter is to support layer deployment where different CCs are of different coverage and for accommodating different traffic, and also inter-band CA and co-existence with other systems in certain frequency bands. The inventors have discerned that this will lead to a problem at least when there is a legacy (Release 8/9) UE in the mix. Figure 1 B illustrates such a problem.

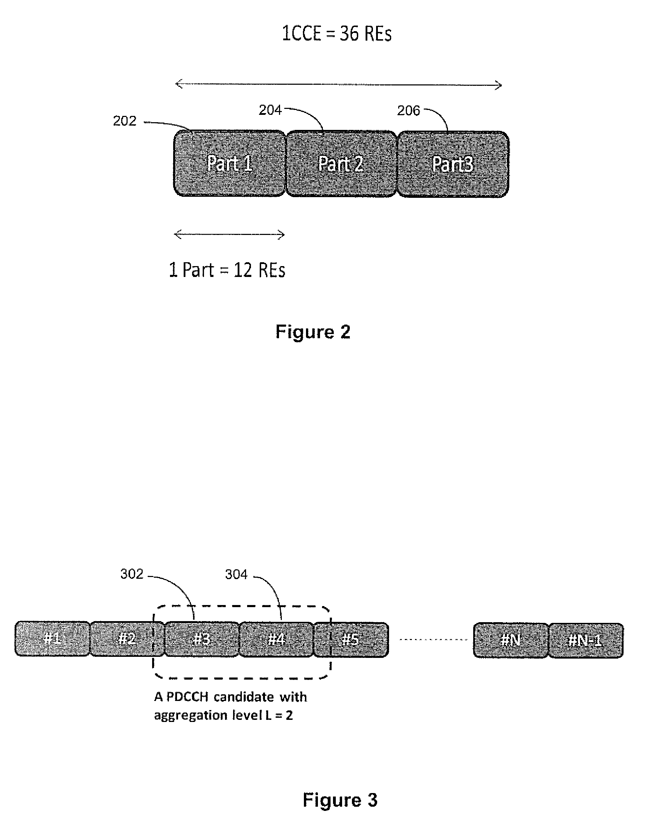

For Figure 1B assume there is a first UE which is compatible with LTE Release-11 and a second/legacy UE which is not. The first UE has the PCell and SCell of Figure 2 active and the legacy UE is active only on the PCell. The PCell has UL/DL configuration #5 in which the UE expects to check the PDCCH in subframe #0 (102) to see if it is scheduled and the PHICH maps only to subframe #8 per the table from TS 36.211 referenced above. The SCell has UL/DL configuration #0, which has the PUSCH (110) of subframe #2 mapping to a PHICH in subframe #6 (112) and the PUSCH of subframe #3 (104) and #4 (106) mapping to a PHICH in subframe #0 (108) of the next frame.

But according to the current agreement in Release 10, the PHICH mapped from the SCell are to be actually in the PCell as shown by the arrows at Figure 1B, since the PCell originally carried the scheduling/PDCCH allocating those PUSCHs in the SCell. The problem is the legacy UE, operating only in the PCell, will look to subframe #0 (108) of the next frame in the PCell for its next PDCCH since it sees only UL/DL configuration #5 in which only subframe #8 is reserved for PHICH, but there will be none because the eNodeB sill be sending PHICHs there (108) due to the SCell scheduling and mapping for the first UE. This ambiguity may impact the legacy UE's PDCCH demapping and therefore blind detection on the PCell. One example is when a legacy UE connected to the Pcell tries to decode PDCCH in DL subframe #0 (108) of the next frame (assuming there are no resources reserved for PHICHs there) and will fail to demap the PDCCHs and thus has no possibility to correctly decode a PDCCH sent in that DL subframe (108).

3GPP draft R1-103531 by Qualcomm Inc., entitled "PHICH for CA Operation", vol. RAN WG1, no. #61bis, 22 June 2010, considers HARQ feedback sent on PHICH for the case of asymmetric 1: many DL/UL CC mapping due to cross-carrier control operation. An approach based on Rel-8 HARQ feedback is described.

The inventors are not aware that this problem has even been recognized previously and so the problem discovery presented above as well as its solution presented below are seen to be novel to the wireless arts.

### SUMMARY:

In a first exemplary embodiment of the invention there is apparatus comprising a user equipment for receiving a physical hybrid automatic repeat request HARQ indicator channel, the apparatus comprising a processing system comprising at least one processor and a memory storing a set of computer instructions, in which the processing system is arranged to:
receive, in a first component carrier, a physical downlink control channel PDCCH allocating to the user equipment a cross-scheduled allocated radio resource in a second component carrier, wherein the first component carrier and the second component carrier have different respective first and second uplink/downlink subframe configurations;
transmit data on the allocated radio resource in the second component carrier;
determine a subframe for receiving an acknowledgement of the transmitted data, wherein the subframe is mapped from the allocated radio resource according to the second uplink/downlink subframe configuration; and
in response to the mapped subframe not being a subframe for acknowledging data according to the first uplink/downlink subframe configuration, tune a radio to a predefined resource within the mapped subframe in the first component carrier for receiving an acknowledgement of the data transmitted on the allocated radio resource in the second component carrier.

In a second exemplary embodiment of the invention there is apparatus comprising a network node for transmitting a physical hybrid automatic repeat request HARQ indicator channel, the apparatus comprising a processing system comprising at least one processor and a memory storing a set of computer instructions, in which the processing system is arranged to:
transmit, in a first component carrier, a physical downlink control channel PDCCH allocating to a user equipment a cross-scheduled allocated radio resource in a second component carrier, wherein the first component carrier and the second component carrier have different respective first and second uplink/downlink subframe configurations;
receive data on the allocated radio resource in the second component carrier;
determine a subframe for receiving an acknowledgement of the transmitted data, wherein the subframe is mapped from the allocated radio resource according to the second uplink/downlink subframe configuration; and
in response to the mapped subframe not being a subframe for acknowledging data according to the first uplink/downlink subframe configuration, tune a radio to a predefined resource within the mapped subframe in the first component carrier for transmitting an acknowledgement of the data received on the allocated radio resource in the second component carrier.

In a third exemplary embodiment of the invention there is a method for a user equipment for receiving a physical hybrid automatic repeat request HARQ indicator channel, the method comprising:
receiving, in a first component carrier, a physical downlink control channel PDCCH allocating to the user equipment a cross-scheduled allocated radio resource in a second component carrier, wherein the first component carrier and the second component carrier have different respective first and second uplink/downlink subframe configurations;
transmitting data on the allocated radio resource in the second component carrier;
determining a subframe for receiving an acknowledgement of the transmitted data, wherein the subframe is mapped from the allocated radio resource according to the second uplink/downlink subframe configuration; and
in response to the mapped subframe not being a subframe for acknowledging data according to the first uplink/downlink subframe configuration, tuning a radio to a predefined resource within the mapped subframe in the first component carrier for receiving an acknowledgement of the data transmitted on the allocated radio resource in the second component carrier.

In a fourth exemplary embodiment of the invention there is a method for a network node for transmitting a physical hybrid automatic repeat request HARQ indicator channel, the method comprising:
transmitting, in a first component carrier, a physical downlink control channel PDCCH allocating to a user equipment a cross-scheduled allocated radio resource in a second component carrier, wherein the first component carrier and the second component carrier have different respective first and second uplink/downlink subframe configurations;
receiving data on the allocated radio resource in the second component carrier;
determining a subframe for receiving an acknowledgement of the transmitted data, wherein the subframe is mapped from the allocated radio resource according to the second uplink/downlink subframe configuration; and
in response to the mapped subframe not being a subframe for acknowledging data according to the first uplink/downlink subframe configuration, tuning a radio to a predefined resource within the mapped subframe in the first component carrier for transmitting an acknowledgement of the data received on the allocated radio resource in the second component carrier.

In a fifth exemplary embodiment of the invention there is a computer readable memory storing a set of instructions, which when executed by a processor, cause the processor to carry out a method according to the third or fourth exemplary embodiments of the invention.

These and other embodiments and aspects are detailed below with particularity.

### BRIEF DESCRIPTION OF THE DRAWINGS:

Figure 1A is a schematic frequency diagram showing a carrier aggregation system in which some component carriers lay in a licensed band and some lay in unlicensed bands.
Figure 1B is an example PCell and SCell with different UL/DL subframe configurations for which cross scheduling a Release-11 UE results in a problem for legacy UEs capable of operation only in one CC, for which exemplary embodiments of this invention resolve.
Figure 2 is a schematic diagram showing division of the CCEs of the next PDCCH subframe #0 (108) of Figure 1B into three groups, in which each group has some CCEs reserved for PHICH according to exemplary embodiments of the invention.
Figure 3 is a schematic diagram showing CCE#3 and CCE#4 of the next PDCCH subframe #0 (108) of Figure 1B being reserved for PHICH according to other exemplary embodiments of the invention.
Figure 4 includes logic flow diagrams from the perspective of the UE and the eNodeB, respectively, that each illustrates the operation of a method, and a result of execution by an apparatus of a set of computer program instructions embodied on a computer readable memory, in accordance with the exemplary embodiments of this invention.
Figure 5 is a simplified block diagram of a UE and an eNodeB which are exemplary electronic devices suitable for use in practicing the exemplary embodiments of the invention.

### DETAILED DESCRIPTION:

The following description and drawings illustrate embodiments of the invention that comprise the features of the independent claims as well as other embodiments of related methods and apparatuses that do not comprise all the features of the independent claims but are useful for better understanding the claimed invention.

J For conciseness, term the UE which is capable of operating simultaneously on multiple CCs which have different UL/DL subframe configurations as a Release-11 UE, and the UE which lacks that capability as a legacy UE. In order to more seamlessly integrate with existing agreements for LTE/LTE-A, embodiments of the invention detailed by example below do not modify the HARQ timing/PHICH mapping for the relevant UL/DL subframe configuration except for the Release-11 UEs and only in the following conditions. As will be seen, this assures there is no impact to the legacy UEs for which the changes to HARQ timing for the Release-11 UEs is transparent. Specifically and with reference to Figure 1A using more general terms Cell#1 and Cell#2 (or alternatively first CC and second CC), there are to conditions in which 'normal' PHICH mapping does not apply for a Release-11 UE:
- when Cell #1 and Cell #2 have different TDD UL/DL subframe configurations, and
- when the PHICH corresponding to the PUSCH transmitted on Cell #2 will have to be transmitted in Cell #1 but Cell #1 itself is not a PHICH subframe according the Cell#1 TDD UL/DL subframe configuration.

So using the example of Figure 1B, the Release-11 UE which is allocated in a PDCCH on the 1^{st} Cell (PCell) a PUSCH in subframe #s 2, 3 and 4 (110, 104, 106) in the 2^{nd} Cell (SCell) will use the 2^{nd} Cell's UL/DL subframe configuration #0 to find these PUSCHs map respectively to subframes #6 (112) and #0 (108) of the next frame. But looking at what the UL/DL subframe configuration #5 of the 1^{st} Cell finds that subframe #6 (112) of the 1^{st} Cell satisfies the above two conditions since it is not a PHICH subframe according to the 1^{st} Cell's UL/DL subframe configuration #5 (while PHICH is possible in subframe #0 (108) of the next frame and so the PUSCHs in the 2^{nd} Cell at subframe #3 (104) and #4 (106) will map to their PHICHs conventionally). Thus the two conditions above are satisfied for this Release-11 UE only for its PHICH mapping from the PUSCH in the 2^{nd} Cell at subframe #2 (110).

The solution according to these exemplary embodiments is to utilize a predefined resource within the mapped subframe 112 in the 1^{st} Cell for the PHICH associated with the allocated radio resource 110 in the 2^{nd} Cell. These predefined resources are transparent to the legacy UE since for example it will still be able to see its PDSCH in some resources within the subframe #6 (112) as it expects given the 1^{st} Cell's UL/DL subframe configuration #5. But simultaneously the Release-11 UE will be able to see the PHICH for its PUSCH 110 in other resources of that same subframe #6 (112) in the 1^{st} Cell, and that same subframe #6 (112) maps normally (on a subframe-basis) according to the 2^{nd} Cell's UL/DL subframe configuration #0.

In one specific embodiment, where the mapped subframe is a PDCCH according to the 1^{st} Cell's UL/DL subframe configuration, the predefined resource is one or more CCEs in the mapped PDCCH subframe. In another specific embodiment, where the mapped subframe is a PDSCH according to the 1^{st} Cell's UL/DL subframe configuration as in Figure 1B, the predefined resource is one or more PRBs within the PDSCH subframe. By example, if as in Figure 1B that the 1^{st} Cell's UL/DL subframe configuration #5 sets subframe #6 as a PDSCH, then the solution for mapping the PHICH corresponding to the UE's PUSCH in the 2^{nd} Cell at subframe #2 (110) will have PRBs reserved for that purpose in that subframe #6 (112) in the 1^{st} Cell. For more scheduling flexibility on the network side both these embodiments may be employed at once for PDCCH and PDSCH subframes.

For the CCE-specific embodiment, higher layer signaling (e.g., RRC signaling) may be used to inform the UE the total number of CCE(s) which are reserved, indices of the reserved CCE(s), and the number of PHICH resource groups that are mapped to these resources. CCE resource groups are detailed further below. For the PRB-specific embodiment, higher layer signaling (e.g., RRC signaling) may similarly be used to inform the UE of the number of PRBs which are reserved, the resource allocation type and the indices of the reserved PRBs, and the number of PHICH resource groups that are mapped to these resources.

Figure 1B also illustrates that PUSCHs in subframe #3 (104) and #4 (106) both map to the same subframe #0 (108) of the next frame. While Figure 1B assumes those PUSCHs are allocated to one Release-11 UE, if one assumes they are allocated to different UEs and that the criteria were satisfied as to subframe #0 (108) of the next frame, then subframe #0 (108) would also have multiple CCEs reserved for PHICH and it becomes clear that the network can multiplex, in those predefined CCE resources within subframe #0 (108) of the next frame in the 1^{st} Cell, its PHICHs for multiple UEs.

Following are exemplary but non-limiting embodiments as to how exactly to map the PHICH to the reserved CCE or PRB resources.

For the CCE embodiment in which the subframe which maps according to the 1^{st} Cell is a PDCCH subframe, in a specific embodiment the generation and mapping of PHICH signals to predetermined and reserved CCEs in that subframe are as follows. One CCE has nine resource element groups or 36 total resource elements REs, which in this example is divided into three parts 202, 204, 206; each having twelve REs as shown at Figure 2. In this embodiment each part 202, 204, 206 contains twelve REs as shown in Figure 2, and each part 202, 204, 206 contains a set of PHICH resources which may be used to accommodate the PHICHs for multiple UEs. Within each part 202, 204, 206 there is a PHICH signal for a given UE, according to conventional practice for LTE Releases 8/9/10. The resulting signal is then in the form of either: [X X X] where X is a length-4 sequence (for normal-length cyclic prefixes in the PHICH); or [Y Y Y Y Y Y] where Y is a length-2 sequence (for extended-length cyclic prefixes in the PHICH).

Therefore in this specific embodiment the three PHICH groups fit into the three parts 202, 204, 206 of the parsed/subdivided CCE 200 as defined in Figure 2. Three is the minimum granularity for resource reservation due to the CCE structure, so when the number of configured PHICH groups is less than three the extra resources in the reserved part 202, 204, 206 allow the network to give a certain degree of repetition of its transmissions of the PHICH signals to the UEs. One way to implement this repetition is for the UE to implicitly derive it based on the number of configured PHICH groups and the total amount of reserved CCEs.

As noted above, from the Figure 2 embodiment it can be seen that the resources reserved for PHICH transmissions remain transparent to the legacy UEs on the 1^{st} Cell, which makes implementation much simpler in systems which are handling both legacy and Release-11 UEs. The resource reservation and subframe configuration (number of PHICH groups and total amount of reserved CCEs) may be decided by the network and signaled to the UE, such as via RRC signaling.

In another specific embodiment the PHICH signal is transmitted by the network in the 2^{nd} Cell and in the subframe which maps according to the UL/DL subframe configuration of the 2^{nd} Cell. By UL/DL subframe configuration #0, a PUSCH in subframe #2 (110) maps to its PHICH in subframe #6 (which is a special subframe at the transition from DL to UL subframes). Adapting Figure 1B to illustrate this specific embodiment, the network will send its PHICH in subframe #6 (114) on the 2^{nd} Cell, and that PHICH will be in reply to the Release-11 UE's PUSCH transmitted in subframe #3 (110) on the 2^{nd} Cell where that PUSCH was scheduled by a PDCCH sent in subframe #0 (102) on the 1^{st} Cell.

This embodiment is useful particularly where the PHICH performance is acceptable on the 2^{nd} Cell given the interference level on the control region. While the PHICH resource allocation and mapping the physical resources generally follow the conventional UL/DL subframe configuration-specific mappings now in the 3GPP LTE specifications, in one implementation of this specific embodiment the UE will be configured with two sets of resources; one on the 1^{st} Cell (112 in Figure 1B) and one on the 2^{nd} Cell (114 in Figure 1B). Additionally, with this specific implementation when the 2^{nd} Cell is configured with a "non-PDCCH region", there may be some impact on the UE implementation in terms of PDCCH demapping and de-rate matching, since only PHICH signals instead of the PDCCH region are mapped to the first few symbols in the subframe 114 on the 2^{nd} Cell. This is more a decoding issue than a signaling issue and can be addressed by the different UE manufacturers as they see fit without a standardized system-wide solution.

Now consider two alternative implementations of the embodiment immediately above in which the UE is configured with two sets of PHICH resources, one set in each of the 1^{st} and 2^{nd} Cells.

In a first implementation assume there are an integer number N of CCEs within the PDCCH region on the 1^{st} Cell in the mapped subframe). The eNodeB will reserve for example CCE #a to #(a+k) for PHICH transmissions, and the number of reserved CCEs is signaled to the UE via an RRC message or is known a priori by the aggregation level. By example assume as in Figure 3 that CCE #3 (302) and #4 (304) are reserved, which may correspond to a PDCCH candidate with CCE aggregation level L = 2. Since these reserved resources are legitimate candidates for PDCCH, this implementation is transparent to the legacy UEs since from their perspective there is no difference whether these CCEs 302, 304 are reserved for PHICH or used for some other UE's PDCCHs.

The second implementation is similar to the first except some PRBs in the PDSCH region are reserved. In a specific embodiment of this second implementation the network can enable frequency diversity by separating the PRBs sufficiently within the bandwidth, or the network can instead use PDSCH resource allocation type 2 where the distributed virtual resource block VRB definition of LTE applies.

For both of the above first and second alternatives the reserved resources will not be assigned for PDCCH/PDSCH transmissions, meaning there may be some lost transmission capacity. But the loss is seen to be minimal since the amount of PHICH resources will naturally be limited in practice, the most typical value would be one CCE or one PRB. Further limiting this potential loss is the fact that the eNodeB itself will know in advance the reserved resources, and so if on occasion no PHICH is needed in the subframe the eNodeB will retain the flexibility to schedule PDCCH/PDSCH in those resources.

Above it was briefly mentioned that PHICHs for the UEs can be multiplexed in the reserved resources. This is straightforward and illustrated by example. Assume there are 36 REs reserved according to these teachings for PHICH (i.e., one CCE within a PDCCH region) and that the modulated PHICH sequence is of length 12. Then there will be up to three PHICH groups that can be multiplexed, whereas conventionally in LTE each PHICH group can accommodate up to eight UEs via code division multiplexing CDM. Thus there is no change in the PHICH encoding and modulation, it simply follows the conventional LTE approach. Additionally, cell-specific scrambling on the PHICH sequences can be used as is conventional to avoid inter-cell interference. Multiplexing for the case in which PDSCH resources are reserved follow similarly to that above for the reserved PDCCH resources.

By non-limiting example now are presented two options for assigning PHICH resources to multiple UEs in order to support the above multiplexing. Both are considered to be low complexity and relatively easy to implement into existing LTE systems.

In a first option there is an implicit resource assignment. For example, each reserved PHICH resource is linked to the PRB index of the UE's PUSCH and also the index of the DMRS cyclic shift for that same UE. This generally follows the conventional LTE design so any added complexity is minimal; all that needs to be done is to clarify the parameters such as N_PHICH_group and I_PHICH (see for example 3GPP TS 36.213 for these parameters). One functional difference from the conventional LTE practice is that now the Release-11 UEs will determine the exact PHICH resource in the new resources instead of using the PHICH resources mapped according to conventional LTE specifications.

In a second option there is an explicit resource assignment. For example each

Release-11 UE which supports multiplexed PHICHs is semi-statically assigned one PHICH by the network. For the PDCCH case the PHICH resources are borrowed from the PDCCH region, so this explicit resource assignment may include a CCE index (or index range if multiple CCEs are reserved) and a PHICH resource index within these resources. If we assume that one CCE has 3*8 = 24 different PHICH resources, then any given UE will be assigned one of them. This is somewhat similar in concept to PUCCH Format 3 resource allocation in conventional LTE Release 10.

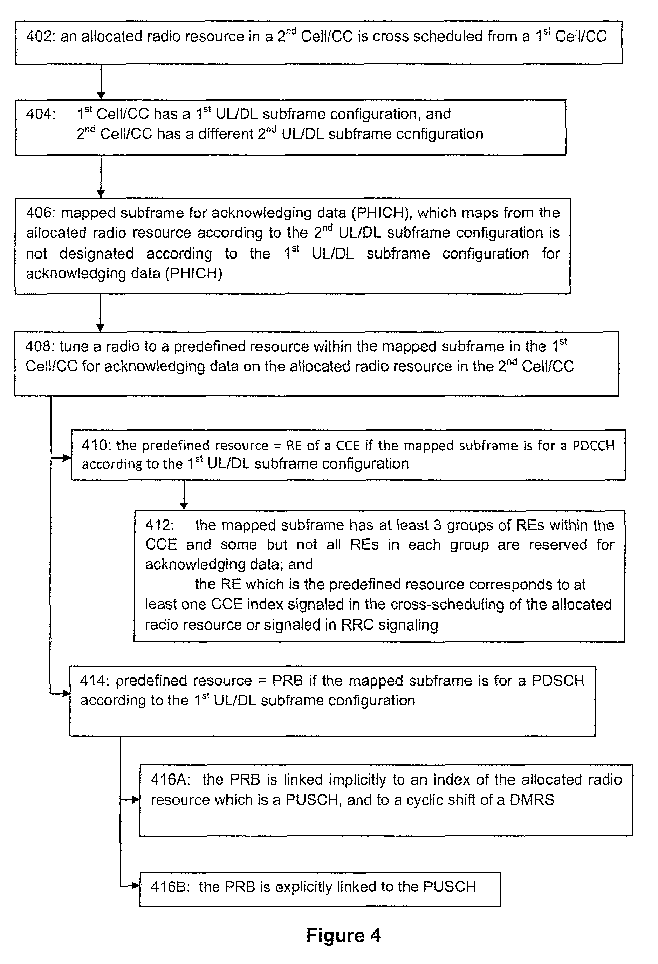

Figure 4 is a logic flow diagram which summarize the above various exemplary embodiments of the invention. It is worded to reflect the perspective of both the network/eNodeB and of the Release-11 UE. Figure 4 may be considered to illustrate the operation of a method, and a result of execution of a computer program stored in a computer readable memory, and a specific manner in which components of an electronic device are configured to cause that electronic device to operate, whether such an electronic device is the UE, the eNodeB, or one or more components thereof such as a modem, chipset, or the like. The various blocks shown in Figure 4 may also be considered as a plurality of coupled logic circuit elements constructed to carry out the associated function(s), or specific result of strings of computer program code or instructions stored in a memory.

Such blocks and the functions they represent are non-limiting examples, and may be practiced in various components such as integrated circuit chips and modules, and that the exemplary embodiments of this invention may be realized in an apparatus that is embodied as an integrated circuit. The integrated circuit, or circuits, may comprise circuitry (as well as possibly firmware) for embodying at least one or more of a data processor or data processors, a digital signal processor or processors, baseband circuitry and radio frequency circuitry that are configurable so as to operate in accordance with the exemplary embodiments of this invention. In Figure 4 the terms 1^{st} Cell/CC and 2^{nd} Cell/CC are used to distinguish them from one another; the 1^{st} Cell/CC may be a PCell/PCC or an activated SCell/SCC for example and the 2^{nd} Cell/CC may be the other Cell/CC (SCell/SCC or possibly even the PCell/PCC if there can be cross-scheduling from an SCell/SCC to the PCell/PCC) on which the UE was cross-scheduled from the 1^{st} Cell/CC.

In the Figure 4 embodiment blocks 402, 404 and 406 set the initial conditions noted above for which the exemplary embodiments are to be practiced. At block 402 an allocated radio resource in a 2^{nd} Cell/CC is cross scheduled from a 1^{st} Cell/CC. At block 404 it is recognized that the 1^{st} Cell/CC and the 2^{nd} Cell/CC have different UL/DL subframe configurations (respectively, 1^{st} and 2^{nd} UL/DL subframe configurations). Then at block 406 it is determined that a mapped subframe for acknowledging data mapped from the allocated radio resource according to the 2^{nd} UL/DL subframe configuration is NOT a subframe for acknowledging data according to the 1^{st} UL/DL subframe configuration. In response to these conditions being satisfied, then Figure 4 follows with tuning a radio to a predefined resource within the mapped subframe in the 1^{st} Cell/CC for acknowledging data on the allocated radio resource in the 2^{nd} Cell/CC.

In the above LTE-specific examples, if it is the UE performing the operations of Figure 4 then for block 402 that UE receives in the 1^{st} Cell/CC a PDCCH allocating to it the cross-scheduled allocated radio resource in the 2^{nd} Cell/CC, the allocated radio resource itself is a PUSCH, and tuning the radio at block 408 means tuning its radio receiver to receive a physical HARQ indicator channel PHICH. If instead for LTE-specific examples it is the eNodeB (or more generally a network access node) performing the operations of Figure 4 then for block 402 the network access node sends in the 1^{st} Cell/CC a PDCCH allocating to the UE the cross-scheduled allocated radio resource in the 2^{nd} Cell/CC, the allocated radio resource itself is again a PUSCH, and tuning the radio at block 408 means tuning its radio transmitter to send a physical HARQ indicator channel PHICH to the UE.

Further portions of Figure 4 explore the various example embodiments detailed with particularity above. At block 410 the predefined resource of block 408 is a resource element RE within a control channel element CCE if the mapped subframe is for a physical downlink control channel PDCCH according to the 1^{st} UL/DL subframe configuration. Further detail at block 412 tells that the mapped subframe has at least three groups of REs within that same CCE and some but not all REs in each group are reserved for acknowledging data, and the particular reserved RE that is the predefined resource first mentioned at block 408 corresponds to at least one CCE index which the network signaled to the UE. In one embodiment that CCE index is signaled in the cross-scheduling of the allocated radio resource at block 402, and in another embodiment it is signaled by higher layers (e.g., in RRC signaling).

The case in which the reserved resource mentioned at block 408 is a PRB is explored at blocks 414 and 416A-B. In this case block 414 tells that the subframe of block 406 mapped according to the 2^{nd} UL/DL subframe configuration (and lying in the 1^{st} Cell per block 408) is for a PDSCH. Block 416A explores a particular embodiment in which the PRB which is the predefined/reserved resource of block 408 is linked implicitly to an index of the PUSCH (which is the allocated radio resource of block 402) and to a cyclic shift of a demodulation reference signal DMRS. Block 416B explores an alternative particular embodiment in which the PRB which is the predefined/reserved resource of block 408 is explicitly linked to the PUSCH.

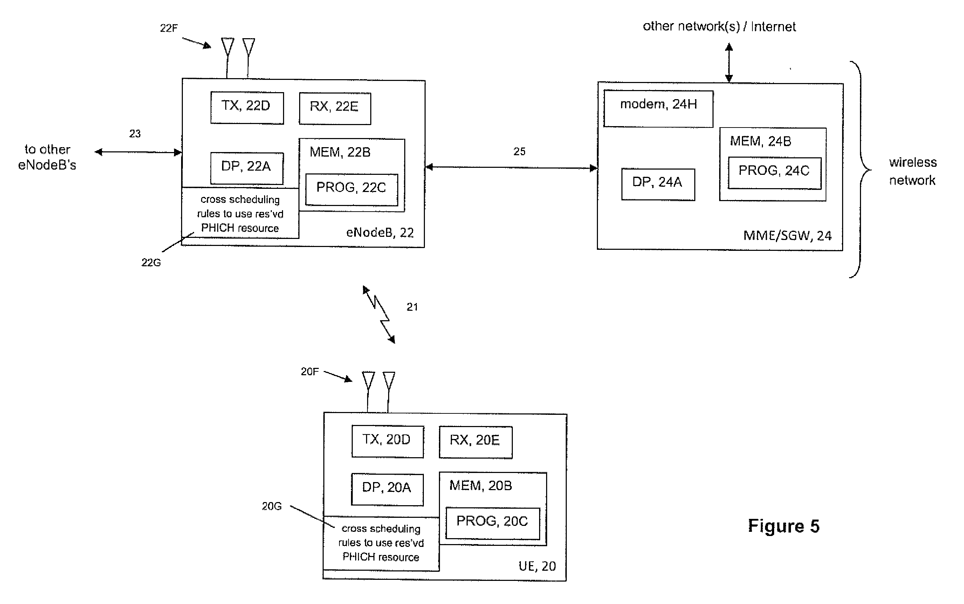

Reference is now made to Figure 5 for illustrating a simplified block diagram of various electronic devices and apparatus that are suitable for use in practicing the exemplary embodiments of this invention. In Figure 5 an eNodeB 22 is adapted for communication over a wireless link 21 with an apparatus, such as a mobile terminal or UE 20. The eNodeB 22 may be any access node (including frequency selective repeaters) of any wireless network such as LTE, LTE-A, GSM, GERAN, WCDMA, and the like. The operator network of which the eNodeB 22 is a part may also include a network control element such as a mobility management entity MME and/or serving gateway SGW 24 or radio network controller RNC which provides connectivity with further networks (e.g., a publicly switched telephone network PSTN and/or a data communications network/Internet).

The UE 20 includes processing means such as at least one data processor (DP) 20A, storing means such as at least one computer-readable memory (MEM) 20B storing at least one computer program (PROG) 20C or other set of executable instructions, communicating means such as a transmitter TX 20D and a receiver RX 20E for bidirectional wireless communications with the eNodeB 22 via one or more antennas 20F. Also stored in the MEM 20B at reference number 20G are the cross scheduling rules such as those set forth at blocks 402, 404 and 406 of Figure 4 above for when to utilize the reserved/predetermined resources for PHICH, as well as any specific mapping to REs/PRBs such as noted above by the index numbers.

The eNodeB 22 also includes processing means such as at least one data processor (DP) 22A, storing means such as at least one computer-readable memory (MEM) 22B storing at least one computer program (PROG) 22C or other set of executable instructions, and communicating means such as a transmitter TX 22D and a receiver RX 22E for bidirectional wireless communications with the UE 20 via one or more antennas 22F. The eNodeB 22 stores at block 22G similar cross scheduling rules as noted for the UE 20 and as variously described in the embodiments above.

While not particularly illustrated for the UE 20 or eNodeB 22, those devices are also assumed to include as part of their wireless communicating means a modem and/or a chipset which may or may not be inbuilt onto an RF front end chip within those devices 20, 22 and which also operates utilizing the cross-scheduling rules and PHICH reservations/mapping according to these teachings.

At least one of the PROGs 20C in the UE 20 is assumed to include a set of program instructions that, when executed by the associated DP 20A, enable the device to operate in accordance with the exemplary embodiments of this invention, as detailed above. The eNodeB 22 also has software stored in its MEM 22B to implement certain aspects of these teachings. In these regards the exemplary embodiments of this invention may be implemented at least in part by computer software stored on the MEM 20B, 22B which is executable by the DP 20A of the UE 20 and/or by the DP 22A of the eNodeB 22, or by hardware, or by a combination of tangibly stored software and hardware (and tangibly stored firmware). Electronic devices implementing these aspects of the invention need not be the entire devices as depicted at Figure 5 or may be one or more components of same such as the above described tangibly stored software, hardware, firmware and DP, or a system on a chip SOC or an application specific integrated circuit ASIC.

In general, the various embodiments of the UE 20 can include, but are not limited to personal portable digital devices having wireless communication capabilities, including but not limited to cellular telephones, navigation devices, laptop/palmtop/tablet computers, digital cameras and music devices, and Internet appliances.

Various embodiments of the computer readable MEMs 20B, 22B include any data storage technology type which is suitable to the local technical environment, including but not limited to semiconductor based memory devices, magnetic memory devices and systems, optical memory devices and systems, fixed memory, removable memory, disc memory, flash memory, DRAM, SRAM, EEPROM and the like. Various embodiments of the DPs 20A, 22A include but are not limited to general purpose computers, special purpose computers, microprocessors, digital signal processors (DSPs) and multi-core processors.

Various modifications and adaptations to the foregoing exemplary embodiments of this invention may become apparent to those skilled in the relevant arts in view of the foregoing description. While the exemplary embodiments have been described above in the context of the LTE and LTE-A system, as noted above the exemplary embodiments of this invention may be used with various other CA-type wireless communication systems.

Further, some of the various features of the above non-limiting embodiments may be used to advantage without the corresponding use of other described features. The foregoing description should therefore be considered as merely illustrative of the principles, teachings and exemplary embodiments of this invention, and not in limitation thereof.

## Claims

1. Apparatus comprising a user equipment for receiving a physical hybrid automatic repeat request HARQ indicator channel, the apparatus comprising a processing system comprising at least one processor and a memory storing a set of computer instructions, in which the processing system is arranged to:
receive, in a first component carrier, a physical downlink control channel PDCCH allocating to the user equipment a cross-scheduled (402) allocated radio resource in a second component carrier, wherein the first component carrier and the second component carrier have different respective first and second uplink/downlink subframe configurations (404);
transmit data on the allocated radio resource in the second component carrier;
determine (406) a subframe for receiving an acknowledgement of the transmitted data, wherein the subframe is mapped from the allocated radio resource according to the second uplink/downlink subframe configuration; and
in response to the mapped subframe not being a subframe for acknowledging data according to the first uplink/downlink subframe configuration, tune (408) a radio to a predefined resource reserved within the mapped subframe in the first component carrier for receiving an acknowledgement of the data transmitted on the allocated radio resource in the second component carrier.

2. Apparatus comprising a network node for transmitting a physical hybrid automatic repeat request HARQ indicator channel, the apparatus comprising a processing system comprising at least one processor and a memory storing a set of computer instructions, in which the processing system is arranged to:
transmit, in a first component carrier, a physical downlink control channel PDCCH allocating to a user equipment a cross-scheduled (402) allocated radio resource in a second component carrier, wherein the first component carrier and the second component carrier have different respective first and second uplink/downlink subframe configurations (404);
receive data on the allocated radio resource in the second component carrier;
determine (406) a subframe for transmitting an acknowledgement of the received data, wherein the subframe is mapped from the allocated radio resource according to the second uplink/downlink subframe configuration; and
in response to the mapped subframe not being a subframe for acknowledging data according to the first uplink/downlink subframe configuration, tune (408) a radio to a predefined resource reserved within the mapped subframe in the first component carrier for transmitting an acknowledgement of the data received on the allocated radio resource in the second component carrier.

3. Apparatus according to claim 1 or 2, in which at least one of:
the predefined resource comprises a resource element RE within a control channel element CCE if the mapped subframe is for a physical downlink control channel PDCCH according to the first uplink/downlink subframe configuration; and
the predefined resource comprises a physical resource block PRB if the mapped subframe is for a physical downlink shared channel PDSCH according to the first uplink/downlink subframe configuration.

4. Apparatus according to claim 3, in which the predefined resource is the RE within the CCE, and the mapped subframe comprises at least three groups of REs within the CCE, and some but not all REs in each group are reserved for acknowledging data.

5. Apparatus according to claim 4 in which:
the predefined resource is the RE within the CCE, and
the RE that is the predefined resource either corresponds to at least one CCE index signaled in the cross-scheduling of the allocated radio resource or signaled in Radio Resource Control signaling, or implicitly maps from the allocated radio resource.

6. Apparatus according to claim 3, in which the predefined resource is a PRB, and the PRB is either explicitly linked to the allocated radio resource, or linked implicitly to an index of the allocated radio resource which is a physical uplink shared channel PUSCH and to a cyclic shift of a demodulation reference signal.

7. A method for a user equipment for receiving a physical hybrid automatic repeat request HARQ indicator channel, the method comprising:
receiving, in a first component carrier, a physical downlink control channel PDCCH allocating to the user equipment a cross-scheduled (402) allocated radio resource in a second component carrier, wherein the first component carrier and the second component carrier have different respective first and second uplink/downlink subframe configurations (404);
transmitting data on the allocated radio resource in the second component carrier;
determining (406) a subframe for receiving an acknowledgement of the transmitted data, wherein the subframe is mapped from the allocated radio resource according to the second uplink/downlink subframe configuration; and
in response to the mapped subframe not being a subframe for acknowledging data according to the first uplink/downlink subframe configuration, tuning (408) a radio to a predefined resource reserved within the mapped subframe in the first component carrier for receiving an acknowledgement of the data transmitted on the allocated radio resource in the second component carrier.

8. A method for a network node for transmitting a physical hybrid automatic repeat request HARQ indicator channel, the method comprising:
transmitting, in a first component carrier, a physical downlink control channel PDCCH allocating to a user equipment a cross-scheduled (402) allocated radio resource in a second component carrier, wherein the first component carrier and the second component carrier have different respective first and second uplink/downlink subframe configurations (404);
receiving data on the allocated radio resource in the second component carrier;
determining (406) a subframe for transmitting an acknowledgement of the received data, wherein the subframe is mapped from the allocated radio resource according to the second uplink/downlink subframe configuration; and
in response to the mapped subframe not being a subframe for acknowledging data according to the first uplink/downlink subframe configuration, tuning (408) a radio to a predefined resource reserved within the mapped subframe in the first component carrier for transmitting an acknowledgement of the data received on the allocated radio resource in the second component carrier.

9. A method according to claim 7 or 8, in which at least one of:
the predefined resource comprises a resource element RE within a control channel element CCE if the mapped subframe is for a physical downlink control channel PDCCH according to the first uplink/downlink subframe configuration; and
the predefined resource comprises a physical resource block PRB if the mapped subframe is for a physical downlink shared channel PDSCH according to the first uplink/downlink subframe configuration.

10. A method according to claim 9, in which the predefined resource is the RE within the CCE, and the mapped subframe comprises at least three groups of REs within the CCE, and some but not all REs in each group are reserved for acknowledging data.

11. A method according to claim 9, in which:
the predefined resource is the RE within the CCE,
the mapped subframe comprises at least three groups of REs within the CCE, and some but not all REs in each group are reserved for acknowledging data; and
the RE that is the predefined resource either corresponds to at least one CCE index signaled in the cross-scheduling of the allocated radio resource or signaled in Radio Resource Control signaling, or implicitly maps from the allocated radio resource.

12. A method according to claim 9, wherein the predefined resource is a PRB, and the PRB is either explicitly linked to the allocated radio resource, or linked implicitly to an index of the allocated radio resource which is a PUSCH and to a cyclic shift of a demodulation reference signal.

13. A computer readable memory storing a set of instructions, which when executed by a processor, cause the processor to carry out a method according to any of claims 7 to 12.

## Patentansprüche

1. Vorrichtung, die ein Benutzergerät zum Empfangen eines physikalischen hybride automatische Wiederholungsanforderung HARQ Indikatorkanals aufweist, wobei die Vorrichtung ein Verarbeitungssystem aufweist, das wenigstens einen Prozessor und einen Speicher aufweist, der einen Satz von Computeranweisungen speichert, in dem das Verarbeitungssystem eingerichtet ist zum:
Empfangen auf einem ersten Komponententräger eines physikalischen Abwärtsverbindungskontrollkanals PDCCH, der dem Benutzergerät eine übergreifendgeplante (402) zugewiesene Funkressource auf einem zweiten Komponententräger zuweist, wobei der erste Komponententräger und der zweite Komponententräger verschiedene jeweilige erste und zweite Aufwärtsverbindung/Abwärtsverbindung-Subrahmenkonfigurationen (404) haben;
Übertragen von Daten auf der zugewiesenen Funkressource auf dem zweiten Komponententräger;
Bestimmen (406) eines Subrahmens zum Empfangen einer Bestätigung der übertragenen Daten, wobei der Subrahmen gemäß der zweiten Aufwärtsverbindung/Abwärtsverbindung-Subrahmenkonfiguration von der zugewiesenen Funkressource abgebildet wird; und
in Antwort darauf, dass der abgebildete Subrahmen kein Subrahmen zum Bestätigen von Daten gemäß der ersten Aufwärtsverbindung/Abwärtsverbindung-Subrahmenkonfiguration ist, Einstellen (408) eines Funks auf eine vorbestimmte Ressource, die innerhalb des abgebildeten Subrahmens auf dem ersten Komponententräger zum Empfangen einer Bestätigung der Daten reserviert ist, die auf der zugewiesenen Funkressource auf dem zweiten Komponententräger übertragen werden.

2. Vorrichtung, die einen Netzwerkknoten zum Übertragen eines physikalischen hybride automatische Wiederholungsanforderung HARQ Indikatorkanals aufweist, wobei die Vorrichtung ein Verarbeitungssystem aufweist, das wenigstens einen Prozessor und einen Speicher aufweist, der einen Satz von Computeranweisungen speichert, in dem das Verarbeitungssystem eingerichtet ist zum:
Übertragen auf einem ersten Komponententräger eines physikalischen Abwärtsverbindungskontrollkanals PDCCH, der dem Benutzergerät eine übergreifend-geplante (402) zugewiesene Funkressource auf einem zweiten Komponententräger zuweist, wobei der erste Komponententräger und der zweite Komponententräger verschiedene jeweilige erste und zweite Aufwärtsverbindung/Abwärtsverbindung-Subrahmenkonfigurationen (404) haben;
Empfangen von Daten auf der zugewiesenen Funkressource auf dem zweiten Komponententräger;
Bestimmen (406) eines Subrahmens zum Empfangen einer Bestätigung der übertragenen Daten, wobei der Subrahmen gemäß der zweiten Aufwärtsverbindung/Abwärtsverbindung-Subrahmenkonfiguration von der zugewiesenen Funkressource abgebildet wird; und
in Antwort darauf, dass der abgebildete Subrahmen kein Subrahmen zum Bestätigen von Daten gemäß der ersten Aufwärtsverbindung/Abwärtsverbindung-Subrahmenkonfiguration ist, Einstellen (408) eines Funks auf eine vorbestimmte Ressource, die innerhalb des abgebildeten Subrahmens auf dem ersten Komponententräger zum Übertragen einer Bestätigung der Daten reserviert ist, die auf der zugewiesenen Funkressource auf dem zweiten Komponententräger empfangen werden.

3. Vorrichtung nach einem der Ansprüche 1 oder 2, die wenigstens eines der folgenden Merkmale aufweist:
die vordefinierte Ressource weist ein Ressourcenelement RE innerhalb eines Kontrollkanalelements CCE auf, wenn der abgebildete Subrahmen für einen physikalischen Abwärtsverbindungskontrollkanal PDCCH gemäß der ersten Aufwärtsverbindung/Abwärtsverbindung-Subrahmenkonfiguration ist; und
die vordefinierte Ressource weist einen physikalischen Ressourcenblock PRB auf, wenn der abgebildete Subrahmen für einen physikalischen gemeinsamen Abwärtsverbindungskanal PDSCH gemäß der ersten Aufwärtsverbindung/Abwärtsverbindung-Subrahmenkonfiguration ist.

4. Vorrichtung nach Anspruch 3, in der die vordefinierte Ressource die RE innerhalb der CCE ist und der gebildete Subrahmen wenigstens drei Gruppen von REs innerhalb der CCE aufweist und einige, aber nicht alle, REs in jeder Gruppe für Bestätigungsdaten reserviert sind.

5. Vorrichtung nach Anspruch 4, in der:
die vordefinierte Ressource die RE innerhalb der CCE ist, und
die RE, die die vordefinierte Ressource ist, entweder einem CCE-Index entspricht, der in der übergreifen Planung der zugewiesenen Funkressource signalisiert wird oder in der Funkressourcenkontrolle signalisiert wird, oder implizit aus der zugewiesenen Funkressource abgebildet wird.

6. Vorrichtung nach Anspruch 3, in der die vorbestimmte Ressource eine PRB ist und die PRB entweder mit der zugewiesenen Funkressource explizit verbunden ist oder mit einem Index der zugewiesenen Funkressource, der ein physikalischen gemeinsamen Aufwärtsverbindungskanal PUSCH ist, und mit einem Zyklenwechsel eines demodulierten Referenzsignals implizit verbunden ist.

7. Verfahren für ein Benutzergerät zum Empfangen eines physikalischen hybride automatische Wiederholungsanforderung HARQ Indikatorkanals, wobei das Verfahren aufweist:
Empfangen auf einem ersten Komponententräger eines physikalischen Abwärtsverbindungskontrollkanals PDCCH, der dem Benutzergerät eine übergreifendgeplante (402) zugewiesene Funkressource auf einem zweiten Komponententräger zuweist, wobei der erste Komponententräger und der zweite Komponententräger verschiedene jeweilige erste und zweite Aufwärtsverbindung/AbwärtsverbindungSubrahmenkonfigurationen (404) haben;
Übertragen von Daten auf der zugewiesenen Funkressource auf dem zweiten Komponententräger;
Bestimmen (406) eines Subrahmens zum Empfangen einer Bestätigung der übertragenen Daten, wobei der Subrahmen gemäß der zweiten Aufwärtsverbindung/Abwärtsverbindung-Subrahmenkonfiguration von der zugewiesenen Funkressource abgebildet wird; und
in Antwort darauf, dass der abgebildete Subrahmen kein Subrahmen zum Bestätigen von Daten gemäß der ersten Aufwärtsverbindung/Abwärtsverbindung-Subrahmenkonfiguration ist, Einstellen (408) eines Funks auf eine vorbestimmte Ressource, die innerhalb des abgebildeten Subrahmens auf dem ersten Komponententräger zum Empfangen einer Bestätigung der Daten reserviert ist, die auf der zugewiesenen Funkressource auf dem zweiten Komponententräger übertragen werden.

8. Verfahren für einen Netzwerkknoten zum Übertragen eines physikalischen hybride automatische Wiederholungsanforderung HARQ Indikatorkanals, wobei das Verfahren aufweist:
Übertragen auf einem ersten Komponententräger eines physikalischen Abwärtsverbindungskontrollkanals PDCCH, der dem Benutzergerät eine übergreifendgeplante (402) zugewiesene Funkressource auf einem zweiten Komponententräger zuweist, wobei der erste Komponententräger und der zweite Komponententräger verschiedene jeweilige erste und zweite Aufwärtsverbindung/Abwärtsverbindung-Subrahmenkonfigurationen (404) haben;
Empfangen von Daten auf der zugewiesenen Funkressource auf dem zweiten Komponententräger;
Bestimmen (406) eines Subrahmens zum Empfangen einer Bestätigung der übertragenen Daten, wobei der Subrahmen gemäß der zweiten Aufwärtsverbindung/Abwärtsverbindung-Subrahmenkonfiguration von der zugewiesenen Funkressource abgebildet wird; und
in Antwort darauf, dass der abgebildete Subrahmen kein Subrahmen zum Bestätigen von Daten gemäß der ersten Aufwärtsverbindung/Abwärtsverbindung-Subrahmenkonfiguration ist, Einstellen (408) eines Funks auf eine vorbestimmte Ressource, die innerhalb des abgebildeten Subrahmens auf dem ersten Komponententräger zum Übertragen einer Bestätigung der Daten reserviert ist, die auf der zugewiesenen Funkressource auf dem zweiten Komponententräger empfangen werden.

9. Verfahren nach Anspruch 7 oder 8, das wenigstens eins der folgenden Merkmale aufweist:
die vordefinierte Ressource weist ein Ressourcenelement RE innerhalb eines Kontrollkanalelements CCE auf, wenn der abgebildete Subrahmen für einen physikalischen Abwärtsverbindungskontrollkanal PDCCH gemäß der ersten Aufwärtsverbindung/Abwärtsverbindung-Subrahmenkonfiguration ist; und
die vordefinierte Ressource weist einen physikalischen Ressourcenblock PRB auf, wenn der abgebildete Subrahmen für einen physikalischen gemeinsamen Abwärtsverbindungskanal PDSCH gemäß der ersten Aufwärtsverbindung/Abwärtsverbindung-Subrahmenkonfiguration ist.

10. Ein Verfahren nach Anspruch 9, in der die vordefinierte Ressource die RE innerhalb der CCE ist und der gebildete Subrahmen wenigstens drei Gruppen von REs innerhalb der CCE aufweist und einige, aber nicht alle REs in jeder Gruppe für Bestätigungsdaten reserviert sind.

11. Verfahren nach Anspruch 9, in dem:
die vordefinierte Ressource die RE innerhalb der CCE ist,
der gebildete Subrahmen wenigstens drei Gruppen von REs innerhalb der CCE aufweist und einige, aber nicht alle, REs in jeder Gruppe für Bestätigungsdaten reserviert sind; und
die RE, die die vordefinierte Ressource ist, entweder einem CCE-Index entspricht, der in der übergreifen Planung der zugewiesenen Funkressource signalisiert wird oder in der Funkressourcenkontrolle signalisiert wird, oder implizit aus der zugewiesenen Funkressource abgebildet wird.

12. Verfahren nach Anspruch 9, in dem die vorbestimmte Ressource eine PRB ist und die PRB entweder mit der zugewiesenen Funkressource explizit verbunden ist oder mit einem Index der zugewiesenen Funkressource, der ein PUSCH ist, und mit einem Zyklenwechsel eines demodulierten Referenzsignals implizit verbunden ist.

13. Computerlesbarer Speicher, der einen Satz von Anweisungen speichert, die, wenn sie durch einen Prozessor ausgeführt werden, den Prozessor zum Realisieren eines Verfahrens nach einem der Ansprüche 7 bis 12 veranlasst.

## Revendications

1. Dispositif comprenant un équipement utilisateur pour recevoir un canal physique d'indicateur de demande de répétition automatique hybride HARQ, le dispositif comprenant un système de traitement comprenant au moins un processeur et une mémoire stockant un ensemble de données informatiques, dans lequel le système de traitement est agencé pour :
recevoir, dans une première composante porteuse, un canal physique de contrôle de liaison descendante PDCCH attribuant à l'équipement utilisateur une ressource radio attribuée inter-planifiée (402) dans une deuxième composante porteuse, dans lequel la première composante porteuse et la deuxième composante porteuse ont des première et deuxième configurations de sous-trame de liaison montante/liaison descendante respectives différentes (404) ;
transmettre des données sur la ressource radio attribuée dans la deuxième composante porteuse ;
déterminer (406) une sous-trame pour recevoir un accusé de réception des données transmises, dans lequel la sous-trame est mappée à partir de la ressource radio attribuée selon la deuxième configuration de sous-trame de liaison montante/liaison descendante ; et
en réponse au fait que la sous-trame mappée n'est pas une sous-trame pour accuser réception de données selon la première configuration de sous-trame de liaison montante/liaison descendante, syntoniser (408) une radio sur une ressource prédéfinie réservée à l'intérieur de la sous-trame mappée dans la première composante porteuse pour recevoir un accusé de réception des données transmises sur la ressource radio attribuée dans la deuxième composante porteuse.

2. Dispositif comprenant un noeud de réseau pour transmettre un canal physique d'indicateur de demande de répétition automatique hybride HARQ, le dispositif comprenant un système de traitement comprenant au moins un processeur et une mémoire stockant un ensemble de données informatiques, dans lequel le système de traitement est agencé pour :
transmettre, dans une première composante porteuse, un canal physique de contrôle de liaison descendante PDCCH attribuant à l'équipement utilisateur une ressource radio attribuée inter-planifiée (402) dans une deuxième composante porteuse, dans lequel la première composante porteuse et la deuxième composante porteuse ont des première et deuxième configurations de sous-trames de liaison montante/liaison descendante respectives différentes (404) ;
recevoir des données sur la ressource radio attribuée dans la deuxième composante porteuse ;
déterminer (406) une sous-trame pour transmettre un accusé de réception des données reçues, dans lequel la sous-trame est mappée à partir de la ressource radio attribuée selon la deuxième configuration de sous-trame de liaison montante/liaison descendante ; et
en réponse au fait que la sous-trame mappée n'est pas une sous-trame pour accuser réception de données selon la première configuration de sous-trame de liaison montante/liaison descendante, syntoniser (408) une radio sur une ressource prédéfinie réservée à l'intérieur de la sous-trame mappée dans la première composante porteuse pour transmettre un accusé de réception des données reçues sur la ressource radio attribuée dans la deuxième composante porteuse.

3. Dispositif selon la revendication 1 ou 2, dans lequel au moins un élément parmi :
la ressource prédéfinie comprend un élément de ressource RE à l'intérieur d'un élément de canal de contrôle CCE si la sous-trame mappée est pour un canal physique de contrôle de liaison descendante PDCCH selon la première configuration de sous-trame de liaison montante/liaison descendante ; et
la ressource prédéfinie comprend un bloc de ressource physique PRB si la sous-trame mappée est pour un canal physique partagé de liaison descendante PDSCH selon la première configuration de sous-trame de liaison montante/liaison descendante.

4. Dispositif selon la revendication 3, dans lequel la ressource prédéfinie est le RE dans le CCE et la sous-trame mappée comprend au moins trois groupes de RE dans le CCE, et certains des RE, mais pas tous, dans chaque groupe sont réservés pour des données d'accusé de réception.

5. Dispositif selon la revendication 4, dans lequel :
la ressource prédéfinie est le RE dans le CCE, et
le RE qui est la ressource prédéfinie soit correspond à au moins un index de CCE signalé dans l'inter-planification de la ressource radio attribuée ou signalé dans une signalisation de contrôle de ressource radio, soit se configure implicitement à partir de la ressource radio attribuée.

6. Dispositif selon la revendication 3, dans lequel la ressource prédéfinie est un PRB et le PRB est soit lié explicitement à la ressource radio attribuée, soit lié implicitement à un index de la ressource radio attribué qui est un canal physique partagé de liaison montante PUSCH et à un décalage cyclique d'un signal de référence de démodulation.

7. Procédé pour un équipement utilisateur pour recevoir un canal physique d'indicateur de demande de répétition automatique hybride HARQ, le procédé comprenant :
la réception, dans une première composante porteuse, d'un canal physique de contrôle de liaison descendante PDCCH attribuant à l'équipement utilisateur une ressource radio attribuée inter-planifiée (402) dans une deuxième composante porteuse, dans lequel la première composante porteuse et la deuxième composante porteuse ont des première et deuxième configurations de sous-trame de liaison montante/liaison descendante respectives différentes (404) ;
la transmission de données sur la ressource radio attribuée dans la deuxième composante porteuse ;
la détermination (406) d'une sous-trame pour recevoir un accusé de réception des données transmises, dans lequel la sous-trame est mappée à partir de la ressource radio attribuée selon la deuxième configuration de sous-trame de liaison montante/liaison descendante ; et
en réponse au fait que la sous-trame mappée n'est pas une sous-trame pour accuser réception de données selon la première configuration de sous-trame de liaison montante/liaison descendante, la syntonisation (408) d'une radio sur une ressource prédéfinie réservée à l'intérieur de la sous-trame mappée dans la première composante porteuse pour recevoir un accusé de réception des données transmises sur la ressource radio attribuée dans la deuxième composante porteuse.

8. Procédé pour un noeud de réseau pour transmettre un canal physique d'indicateur de demande de répétition automatique hybride HARQ, le procédé comprenant :
La transmission, dans une première composante porteuse, un canal physique de contrôle de liaison descendante PDCCH attribuant à l'équipement utilisateur une ressource radio attribuée inter-planifiée (402) dans une deuxième composante porteuse, dans lequel la première composante porteuse et la deuxième composante porteuse ont des première et deuxième configurations de sous-trames de liaison montante/liaison descendante respectives différentes (404) ;
la réception de données sur la ressource radio attribuée dans la deuxième composante porteuse ;
la détermination (406) d'une sous-trame pour transmettre un accusé de réception des données reçues, dans lequel la sous-trame est mappée à partir de la ressource radio attribuée selon la deuxième configuration de sous-trame de liaison montante/liaison descendante ; et
en réponse au fait que la sous-trame mappée n'est pas une sous-trame pour accuser réception de données selon la première configuration de sous-trame de liaison montante/liaison descendante, la syntonisation (408) d'une radio sur une ressource prédéfinie réservée à l'intérieur de la sous-trame mappée dans la première composante porteuse pour transmettre un accusé de réception des données reçues sur la ressource radio attribuée dans la deuxième composante porteuse.

9. Procédé selon la revendication 7 ou 8, dans lequel au moins un élément parmi :
la ressource prédéfinie comprend un élément de ressource RE à l'intérieur d'un élément de canal de contrôle CCE si la sous-trame mappée est pour un canal physique de contrôle de liaison descendante PDCCH selon la première configuration de sous-trame de liaison montante/liaison descendante ; et
la ressource prédéfinie comprend un bloc de ressource physique PRB si la sous-trame mappée est pour un canal physique partagé de liaison descendante PDSCH selon la première configuration de sous-trame de liaison montante/liaison descendante.

10. Procédé selon la revendication 9, dans lequel la ressource prédéfinie est le RE dans le CCE et la sous-trame mappée comprend au moins trois groupes de REs dans le CCE, et certains des REs, mais pas tous, dans chaque groupe sont réservés pour des données d'accusé de réception.

11. Procédé selon la revendication 9, dans lequel :
la ressource prédéfinie est le RE dans le CCE,
la sous-trame mappée comprend au moins trois groupes de REs dans le CCE, et certains des REs, mais pas tous, dans chaque groupe sont réservés pour des données d'accusé de réception ; et
le RE qui est la ressource prédéfinie soit correspond à au moins un index de CCE signalé dans l'inter-planification de la ressource radio attribuée ou signalé dans une signalisation de contrôle de ressource radio, soit se configure implicitement à partir de la ressource radio attribuée.

12. Procédé selon la revendication 9, dans lequel la ressource prédéfinie est un PRB et le PRB est soit lié explicitement à la ressource radio attribuée, soit lié implicitement à un index de la ressource radio attribué qui est un PUSCH et à un décalage cyclique d'un signal de référence de démodulation.

13. Mémoire lisible par ordinateur stockant un ensemble d'instructions qui, quand elles sont exécutées par un processeur, forcent le processeur à exécuter un procédé selon l'une quelconque des revendications 7 à 12.
